(19) **Europäisches Patentamt / European Patent Office / Office européen des brevets**

(11) **EP 4 611 115 A1**

(12) **EUROPEAN PATENT APPLICATION**
published in accordance with Art. 153(4) EPC

(43) Date of publication:
**03.09.2025 Bulletin 2025/36**

(21) Application number: **23907840.5**

(22) Date of filing: **21.12.2023**

(51) International Patent Classification (IPC):
**H01M 10/44** (2006.01)    **H01M 50/105** (2021.01)

(52) Cooperative Patent Classification (CPC):
**H01M 10/44; H01M 50/105**

(86) International application number:
**PCT/KR2023/021348**

(87) International publication number:
**WO 2024/136557 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183741**

(71) Applicant: **LG Energy Solution, Ltd.**
**Seoul 07335 (KR)**

(72) Inventors:
• **JUNG, Jae Min**
**Daejeon 34122 (KR)**
• **KIM, Chang Ho**
**Daejeon 34122 (KR)**
• **KIM, Hyun Jin**
**Daejeon 34122 (KR)**
• **KIM, Seon Uk**
**Daejeon 34122 (KR)**
• **KIM, Jae Min**
**Daejeon 34122 (KR)**

(74) Representative: **Plasseraud IP**
**104 Rue de Richelieu**
**CS92104**
**75080 Paris Cedex 02 (FR)**

(54) **METHOD FOR MANUFACTURING LITHIUM SECONDARY BATTERY**

(57)    The present invention relates to a method for manufacturing a lithium secondary battery, which includes a first step of preparing a battery case, a second step of disposing an electrode assembly in the battery case and injecting an electrolyte such that electrolyte mass per unit capacity is a (g/Ah) to assemble a battery cell, a third step of activating the battery cell, and a fourth step of precharging/discharging the activated battery cell b times, wherein Equation 1 below is satisfied,

$$\text{Equation 1: } 15 \leq 486.77 - 373.09 \times e^{(-0.006b)} \times a^{0.29} \leq 30$$

wherein in Equation 1 above, a is an integer of 2.0 to 3.0 and b is an integer of 0 to 3.

**EP 4 611 115 A1**

PREPARE POUCH — S1

ASSEMBLE BATERRY CELL — S2

ACTIVATION — S3

PRE-CHARGING/DISCHARGING — S4

FIG.1

**Description**

## TECHNICAL FIELD

The present invention relates to a method for manufacturing a lithium secondary battery, and more particularly, to a method for manufacturing a lithium secondary battery having excellent impact resistance.

## BACKGROUND ART

Lithium secondary batteries are generally manufactured in a way that an electrode active material slurry is applied to a positive electrode current collector and a negative electrode current collector to prepare a positive electrode and a negative electrode, and the positive electrode and the negative electrode are stacked on both sides of a separator to form an electrode assembly having a predetermined shape, and then the electrode assembly is accommodated in a pouch and an electrolyte is injected.

Secondary batteries are classified into pouch type secondary batteries and can type secondary batteries according to a material of a case accommodating an electrode assembly. In particular, the pouch type secondary batteries are manufactured by performing press processing on a flexible pouch film laminate to form a cup portion, accommodating an electrode assembly in the cup portion, injecting an electrolyte, and then sealing a sealing portion, whereas the can type secondary batteries are manufactured by accommodating an electrode assembly in a can formed of metal, injecting an electrolyte, and then assembling a top cap on an upper portion of the can for sealing.

The pouch type secondary batteries are lightweight, provide good use of space, and are capable of achieving high energy density by using a stack electrode assembly, but are more vulnerable to external shock than the can type secondary batteries. Today, as the secondary batteries are used in diverse environments, there is a demand for secondary batteries providing excellent safety even in harsh environments, and accordingly, there is a need to improve impact resistance of the pouch type secondary batteries.

## DISCLOSURE OF THE INVENTION

### TECHNICAL PROBLEM

In order to address the above-described tasks, an aspect of the present invention provides a method for manufacturing a lithium secondary battery, which increases a frictional force between a battery case and an electrode assembly by ensuring that an electrolyte injection amount and the number of pre-charging/discharging satisfy a particular relationship in the manufacture of a battery.

### TECHNICAL SOLUTION

According to an aspect of the present invention, provided is a method for manufacturing a lithium secondary battery, which includes a first step of preparing a battery case, a second step of disposing an electrode assembly in the battery case and injecting an electrolyte such that electrolyte mass per unit capacity is a (g/Ah) to assemble a battery cell, a third step of activating the battery cell, and a fourth step of pre-charging/discharging the activated battery cell b times, wherein Equation 1 below is satisfied.

$$\text{Equation 1: } 15 \leq 486.77 - 373.09 \times e^{(-0.006b)} \times a^{0.29} \leq 30$$

In Equation 1 above, a is an integer of 2.0 to 3.0, preferably an integer of 2.0 to 2.5, and b is an integer of 0 to 3.

Preferably, the method for manufacturing a lithium secondary battery may satisfy Equation 1-1 below.

$$15 \leq 486.77 - 373.09 \times e^{(-0.006b)} \times a^{0.29} \leq 27 \qquad \text{Equation 1-1:}$$

In Equation 1-1 above, a and b are the same as in Equation 1.

Meanwhile, in the fourth step, the precharging/discharging may be performed in a SOC range of 0 to 99 at a C-rate of 0.1 C to 1 C.

Preferably, the pre-charging/discharging may be performed in a voltage range of 2.50 V to 4.35 V.

Meanwhile, the third step of activating the battery cell may include charging/discharging the battery cell.

Meanwhile, in the present invention, the battery case may be a pouch including a barrier layer, a base layer formed on one side of the barrier layer, and a sealant layer formed on the other side of the barrier layer, and including at least one cup portion indented in one direction.

In addition, the electrode assembly may have a ratio of full length to full width of 5 to 10, and for example, may have a full length of 400 mm to 600 mm and a full width of 50 to 150 mm.

The lithium secondary battery of the present invention manufactured through the method described above may have a frictional force between an inner surface of the battery case and the electrode assembly of 15 kgf or greater, preferably 15 kgf to 30 kgf.

In addition, the lithium secondary battery of the present invention manufactured through the method described above shows no electrolyte leakage when the lithium secondary battery is subjected to a crash shock test in a crash condition of 133.7 G $\times$ 15.8 ms. That is, the electrolyte leakage is in an amount of 0.

In addition, the lithium secondary battery may have a rated capacity of 50 Ah to 200 Ah.

## ADVANTAGEOUS EFFECTS

As in the present invention, when a battery is manufactured such that an electrolyte injection amount and the number of pre-charging/discharging satisfy a particular relationship, a frictional force between an electrode assembly and an inner surface of a battery case increases significantly compared to the related art, and accordingly, separation of the electrode assembly and/or electrolyte leakage resulting from external impact are/is suppressed, thereby significantly improving the impact resistance of a lithium secondary battery.

A lithium secondary battery of the present invention manufactured according to the method described above exhibits a high frictional force between an electrode assembly and a battery case of 15 kgf or greater, and accordingly, when a crash shock test is performed in a crash condition of 133.7 G $\times$ 15.8 ms, electrolyte leakage resulting from damage to the battery case is not caused.

## BRIEF DESCRIPTION OF THE DRAWINGS

FIG. 1 is a flowchart showing a method for manufacturing a lithium secondary battery according to the present invention;

FIG. 2 is an exploded perspective view of a secondary battery according to an embodiment of the present invention;

FIG. 3 is a view showing a cross-section of a pouch according to an embodiment of the present invention;

FIG. 4 is a view showing the results of measuring a frictional force of secondary batteries manufactured according to methods of Examples 1 to 4; and

FIG. 5 is a view showing the results of measuring a frictional force of secondary batteries manufactured according to methods of Comparative Examples 1 and 2 and Examples 5 and 6.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Hereinafter, the present invention will be described in more detail with reference to specific embodiments.

Today, as the demand for batteries requiring high capacity, such as batteries for electric vehicles, increases, rated capacity of secondary battery cells is on the rise, and the weight of an electrode assembly is also increasing accordingly. However, with the increase in the weight of an electrode assembly, the phenomenon of the electrode assembly moving and damaging a battery case or breaking through the battery case from external impact worsens. When the pouch damage takes place, an electrolyte may leak or the electrode assembly may be deformed, resulting in serious defects in battery performance and safety.

To address the limitations described above, the inventors have conducted repeated research and found that an electrolyte injection amount (a) and the number of precharging/discharging (b) are closely related to a frictional force between the battery case and the electrode assembly. Specifically, the inventors found that when a and b described above satisfy a particular relationship, the frictional force between the electrode assembly and the battery case increases significantly compared to the related art, and accordingly, damage to the battery case due to separation of the electrode assembly from external impact is suppressed, thereby achieving excellent impact resistance, and have thus completed the invention.

Specifically, a method for manufacturing a lithium secondary battery according to the present invention includes a first step of preparing a battery case, a second step of disposing an electrode assembly in the battery case and injecting an electrolyte such that electrolyte mass per unit capacity is a (g/Ah) to assemble a battery cell, a third step of activating the battery cell, and a fourth step of precharging/discharging the activated battery cell b times, and in this case, a and b described above satisfy Equation 1, preferably Equation 1-1 below.

$$\text{Equation 1: } 15 \leq 486.77 - 373.09 \times e^{(-0.006b)} \times a^{0.29} \leq 30$$

$15 \leq 486.77 - 373.09 \times e^{(-0.006b)} \times a^{0.29} \leq 27$                    Equation 1-1:

In Equation 1 and Equation 1-1 above, a is an integer of 2.0 to 3.0, and b is an integer of 0 to 3.

In the manufacture of a battery, when an electrolyte injection amount a per unit capacity and the number of precharging/discharging b satisfy the relationship of Equation 1 or 1-1 above, a frictional force between a battery case and an electrode assembly increases significantly to 15 kgf or greater, and accordingly, impact resistance is greatly improved.

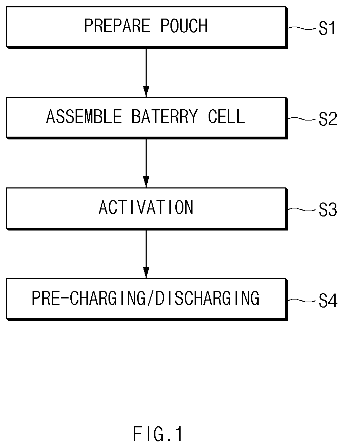

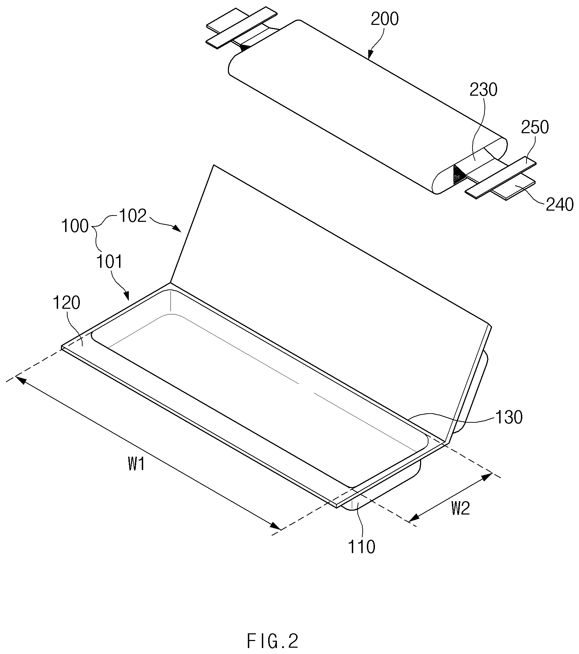

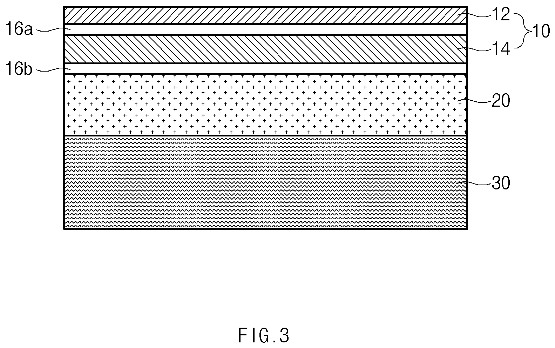

FIG. 1 shows a method for manufacturing a lithium secondary battery according to the present invention, FIG. 2 shows a perspective view of a secondary battery according to an embodiment of the present invention, and FIG. 3 shows a cross-section of a battery case (pouch). Hereinafter, the present invention will be described in more detail with reference to FIGS. 1 to 3.

<Method for manufacturing lithium secondary battery>

First, a method for manufacturing a lithium secondary battery according to the present invention will be described.

**Step 1: Preparing battery case**

First, a battery case accommodating an electrode assembly and an electrolyte is prepared (S1). In this case, the battery case may preferably be a pouch, but is not limited thereto, and may be a square battery case or a cylindrical battery case.

Referring to FIGS. 2 and 3, the battery case may be a pouch 100 including a barrier layer 20, a base layer 10 formed on one side of the barrier layer, and a sealant layer 30 formed on the other side of the barrier layer, and including at least one cup portion 110 indented in one direction.

Specifically, the pouch 100 is flexible and may be manufactured in a way that a pouch film laminate, in which the base layer 10, the barrier layer 20, and the sealant layer 30 are sequentially stacked, is inserted into a press molding device, and pressure is applied to a portion of the pouch film laminate using a punch for stretching to form a cup portion indented in one direction.

The base layer 10 is disposed on an outermost layer of the pouch to protect the electrode assembly from external shock and electrically insulate the electrode assembly.

The base layer 10 may be formed of at least one polymer material selected from the group consisting of, for example, polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base layer 10 may have a single-layer structure or a multi-layer structure in which different polymer films 12 and 14 are stacked, as shown in FIG. 3. When the base layer 10 has a multi-layer structure, an adhesive layer 16a may be interposed between the polymer films.

Meanwhile, the base layer 10 may have a total thickness of 10 $\mu$m to 60 $\mu$m, preferably 20 $\mu$m to 50 $\mu$m, more preferably 30 $\mu$m to 50 $\mu$m. When the base layer has a multi-layer structure, the thickness is a thickness including the adhesive layer. When the base layer 10 satisfies the above range, durability, insulation, and moldability are shown to be excellent. When the base layer is too thin, durability decreases and damage to the base layer may take place during a molding process, and when the base layer is too thick, moldability may decrease, an overall thickness of the pouch increases, and a battery accommodation space decreases, resulting in reduced energy density.

According to an embodiment, the base layer 10 may have a stack structure of a polyethylene terephthalate (PET) film and a nylon film. In this case, it is preferable that the nylon film is disposed on a side of the barrier layer 20, that is, an inner side, and the polyethylene terephthalate film is disposed on a surface side of a pouch.

The polyethylene terephthalate (PET) has excellent durability and electrical insulation, and accordingly, when the PET film is disposed on the surface side, durability and insulation are shown to be excellent. However, the PET film has weak adhesiveness with an aluminum alloy thin film constituting the barrier layer 20 and has different stretching behavior, and thus when the PET film is disposed on the side of the barrier layer, separation of the base layer and the barrier layer may take place during a molding process, and the barrier layer may not be stretched uniformly, which may cause degradation in moldability. In contrast, the nylon film has similar stretching behavior to an aluminum alloy thin film constituting the barrier layer 20, and thus when the nylon film is disposed between polyethylene terephthalate and the barrier layer, moldability may be improved.

The polyethylene terephthalate film may have a thickness of 5 $\mu$m to 20 $\mu$m, preferably 5 $\mu$m to 15 $\mu$m, more preferably 7 $\mu$m to 15 $\mu$m, and the nylon film may have a thickness of 10 $\mu$m to 40 $\mu$m, preferably 10 $\mu$m to 35 $\mu$m, more preferably 15 $\mu$m to 25 $\mu$m. When the thickness of the polyethylene terephthalate film and the thickness of the nylon film satisfy the above range, moldability and rigidity after molding are shown to be excellent.

The barrier layer 20 serves to secure the mechanical strength of the pouch 100, block gas or moisture from entering a secondary battery, and prevent electrolyte leakage.

The barrier layer 20 may have a thickness of 40 $\mu$m to 100 $\mu$m, more preferably 50 $\mu$m to 80 $\mu$m, more preferably 60 $\mu$m to 80 $\mu$m. When the thickness of the barrier layer satisfies the above range, moldability is improved to increase a molding depth of a cup portion or cracks and/or pinholes are less likely to occur even in the molding of two cups, thereby improving resistance to external stress after molding.

Meanwhile, the barrier layer 20 may be formed of a metal material, and specifically, may be formed of an aluminum alloy thin film.

The aluminum alloy thin film may include aluminum and metal elements other than aluminum, for example, at least one or at least two selected from the group consisting of iron (Fe), copper (Cu), chromium (Cr), manganese (Mn), nickel (Ni), magnesium (Mg), silicon (Si), and zinc (Zn).

Preferably, the aluminum alloy thin film may include iron (Fe) in an amount of 1.2 wt% to 1.7 wt%, preferably 1.3 wt% to 1.7 wt%, more preferably 1.3 wt% to 1.45 wt%. When the amount of iron (Fe) in the aluminum alloy thin film satisfies the above range, the generation of cracks or pinholes may be minimized even when a cup portion is formed deeply.

The sealant layer 30 is bonded through heat compression to seal the pouch and is placed in an innermost layer of a pouch film laminate 1.

The sealant layer 30 is a surface that comes into contact with an electrolyte and an electrode assembly after a pouch is formed, and thus is required to have insulation and corrosion resistance, and serves to completely seal the interior and block materials from moving between the inside and the outside, and thus is required to have high sealing properties.

The sealant layer 30 may be formed of a polymer material, and for example, may be formed of at least one selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon, and in particular, may preferably include polypropylene (PP) showing excellent performance in mechanical properties such as tensile strength, rigidity, surface hardness, wear resistance, heat resistance, and chemical properties such as corrosion resistance.

More specifically, the sealant layer 30 may include polypropylene, cast polypropylene (CPP), acid modified polypropylene, polypropylene-butylene-ethylene copolymer, or a combination thereof.

The sealant layer 30 may have a single-layer structure or a multi-layer structure including two or more layers formed of different polymer materials.

The sealant layer 30 may have a thickness of 60 $\mu$m to 100 $\mu$m, preferably 60 $\mu$m to 90 $\mu$m, more preferably 70 $\mu$m to 90 $\mu$m. When the sealant layer is too thin, sealing durability and insulation may be reduced, and when the sealant layer is too thick, flexibility may decrease and a total thickness of the pouch film laminate may increase, resulting in degradation in energy density to volume.

Meanwhile, the pouch film laminate may be manufactured through a method for manufacturing a pouch film laminate known in the art. For example, in the pouch film laminate may be manufactured in a way that the base layer 10 is attached to an upper surface of the barrier layer 20 through an adhesive, and the sealant layer 30 is formed on a lower surface of the barrier layer 20 through coextrusion or an adhesive, but the embodiment is not limited thereto.

The pouch 100 is manufactured by inserting the pouch film laminate as described above into a molding device and applying pressure to a portion of the pouch film laminate using a punch to form a cup portion. In this case, the pressure may be 0.3 MPa to 1 MPa, preferably 0.3 MPa to 0.8 MPa, more preferably 0.4 MPa to 0.6 MPa. When the pressure is too low in the forming of the cup portion, excessive drawing may be caused and thus wrinkles may be generated, and when the pressure is too high, drawing may not be performed well and thus a molding depth may be reduced.

Meanwhile, the punch may have a moving rate of 20 mm/min to 80 mm/min, preferably 30 mm/min to 70 mm/min, more preferably 40 mm/min to 60 mm/min. When the pressure in the molding is too small or the moving rate of the punch is too fast, wrinkles may be generated due to buckling, and when the pressure in the molding is too large or the moving rate of the punch is too slow, stress concentrated at the corner of a cup portion during molding increases, which may generate more pinholes or cracks.

The pouch 100 manufactured through the above method includes a lower case 101, an upper case 102, and a folding portion 130 connecting the lower case and the lower case, and the upper case and/or lower case include a cup portion 110 indented in one direction.

Specifically, the pouch 100 may have a 1-cup shape in which the cup portion 110 is formed only in the lower case 101, as shown in FIG. 2, but the embodiment is not limited thereto, and the pouch 100 may have a 2-cup shape in which the cup portion is formed on both the upper case and the lower case. In the 2-cup pouch, an electrode assembly and an electrolyte are accommodated and then the upper case is folded such that the cup portion of the upper case and the cup portion of the lower case face each other, and thus an electrode assembly which is thicker than the 1-cup shape pouch may be accommodated, and accordingly, it is beneficial in achieving high energy density.

The cup portion 110 has an accommodation space for accommodating the electrode assembly 200. Meanwhile, the pouch 100 may include a terrace 120 around the cup portion 110. The terrace 120 refers to an unmolded portion of a pouch film laminate, that is, the remaining region excluding the cup portion 110. The terrace 129 is a portion that is sealed through heat bonding in the process of accommodating the electrode assembly 200 in the cup portion 110, injecting an electrolyte, and then sealing.

The cup portion 110 may include a bottom surface and a peripheral surface. The peripheral surface may connect the bottom surface and the terrace 120. The peripheral surface is provided in plurality, more specifically four. The bottom surface may cover one side of the electrode assembly 200, and the peripheral surface may surround the circumference of the electrode assembly 200.

Meanwhile, the folding portion 130 connects the lower case 101 and the upper case 102, accommodates the electrode assembly 200 in the cup portion 110, and is folded after injection of an electrolyte to allow the upper case 102 to seal the cup portion 110 of the lower case 101. When the folding portion 130 is included, the lower case 101 and the upper case 102 are connected as a single body, and thus when performing a sealing process later, the number of sides to be sealed is reduced, thereby improving processability.

The folding portion 130 is formed to be spaced apart from the cup portion 110, and a distance between the folding portion 130 and the cup portion 110 may be about 0.5 mm to 3 mm, preferably about 0.5 mm to 2 mm. When the folding portion 130 is formed too close to the cup portion 110, folding is not performed well, and when the folding portion 130 is formed too far from the cup portion 110, the total volume of a secondary battery increases to reduce energy density to volume. In the 2-cup case, the folding portion may be formed to satisfy the above-described distance for each cup portion.

**Step 2: Assembling battery cell**

Next, when the battery case is prepared, an electrode assembly is disposed in the battery case, and an electrolyte is injected to assemble a battery cell (S2).

When the battery case is a pouch, the electrode assembly 200 may be disposed in the cup portion 110 of the pouch and an electrolyte (not shown) may be injected to manufacture a battery cell, and specifically, the electrode assembly may be disposed in the cup portion of the pouch, the electrolyte may be injected, and then the pouch may be folded to allow the upper case and the lower case to be in contact, and heat may be applied to seal a sealant layer to manufacture a battery cell. In this case, a separate gas pocket space may be formed in the terrace 120.

The electrode assembly 200 may include a plurality of electrodes and a plurality of separators, which are alternately stacked. The plurality of electrodes are alternately stacked with the separator therebetween and may include a positive electrode and a negative electrode, which have opposite polarities.

Referring to FIG. 2, the electrode assembly 200 may be provided with a plurality of electrode tabs 230 welded to each other. The plurality of electrode tabs 230 are connected to the plurality of electrodes 210, and protrude outward from the electrode assembly 200, and may thus serve as a path through which electrons move between the inside and the outside of the electrode assembly 200. The plurality of electrode tabs 230 may be placed inside the pouch 100.

The electrode tab 230 connected to the positive electrode and the electrode tab 230 connected to the negative electrode may protrude in different directions with respect to the electrode assembly 200. However, the embodiment is not limited thereto, and the electrode tab 230 connected to the positive electrode and the electrode tab 230 connected to the negative electrode may protrude in the same direction and parallel to each other.

A leads 240 supplying electricity to the outside of a secondary battery may be connected to the plurality of electrode tabs 230 through spot welding, and the like. One end of the lead 240 may be connected to the plurality of electrode tabs 230 and the other end of the lead 240 may protrude to the outside of the pouch 100.

A portion of the lead 240 may be surrounded by an insulation portion 250. For example, the insulation portion 250 may include an insulation tape. The insulation portion 250 may be placed between the terrace 120 of the first case 101 and the second case 102, and in this condition, the terrace 120 and the second case 102 may be heat-fused to each other. In this case, a portion of the terrace 120 and the second case 102 may be heat-fused to the insulation portion 250. Accordingly, the insulation portion 250 may prevent electricity generated from the electrode assembly 200 from flowing to the pouch 100 through the lead 240, and allow the sealing of the pouch 100 to be maintained.

Meanwhile, in the present invention, the electrode assembly 200 may have a ratio of a full length W1 to a full width W2 of 5 to 10, preferably 5 to 8. When the ratio of the full length to the full width satisfies the above range, the effect of obtaining high energy density in a limited space may be achieved.

For example, the electrode assembly may have a full length of 400 mm to 600 mm and a full width of 50 to 150 mm, preferably a full length of 500 mm to 600 mm and a full width of 50 to 100 mm.

Next, the electrolyte serves to move lithium ions generated through electrochemical reactions of an electrode during charging and discharging of a secondary battery and may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used. The lithium salt may be used in a concentration range of 0.1 M to 5.0 M, preferably 0.1 M to 3.0 M. When the concentration of the lithium salt is in the above range, the electrolyte has suitable conductivity and viscosity, thereby exhibiting excellent performance, and lithium ions may effectively move.

In addition to the electrolyte constituents, the electrolyte may further include additives for improving life characteristics of a battery, preventing reduction in battery capacity, and increasing battery discharge capacity.

Meanwhile, in the present invention, the electrolyte is injected such that an electrolyte amount per unit capacity of the secondary battery is a (g/Ah), and in this case, a is 2.0 to 3.0, preferably 2.0 to 2.5, more preferably 2.1 to 2.4. The electrolyte amount per unit capacity indicates a ratio of a electrolyte injection amount (unit: g) to rated capacity (unit: Ah) of a secondary battery. When the electrolyte amount per unit capacity satisfies the above range, excellent impact resistance may be achieved without deteriorating the electrochemical properties of the secondary battery. When the electrolyte amount is too small, battery performance may be degraded due to insufficient electrolyte during battery operation, and when the electrolyte amount is too large, the effect of improving impact resistance is insignificant.

**Step 3: Activation**

After the assembling of the battery cell, an activation process is performed (S3).

The activation process may be performed through a general activation method well known in the art to activate the assembled battery cell to impart electrical properties and stabilize an electrode and an electrolyte. For example, the activation process may be performed by charging and discharging a battery cell, and, if necessary, may include an aging process and/or a degassing process.

The charging/discharging process is intended to charge and discharge the battery cell to impart electrical properties and to form a solid electrolyte interphase (SEI) film on an electrode surface, and the charging/discharging conditions are appropriately adjusted according to the composition of a positive electrode, a negative electrode, and an electrolyte of the battery cell. For example, in a battery using lithium nickel cobalt manganese-based oxide as a positive electrode active material and graphite as a negative electrode active material, charging/discharging may be performed at a voltage range of 2.0 V to 4.4 V at 20 to 60 °C.

Meanwhile, the aging process is intended to ensure that an injected electrolyte is evenly distributed inside a cell and well permeated into a positive electrode and a negative electrode, and is performed by storing the battery cell at a specified temperature and humidity for a certain period of time. For example, the aging process may be performed at 10 °C to 70 °C for 0 to 72 hours, but is not limited thereto.

Meanwhile, the order and number of times that the charging/discharging process and the aging process are performed are not particularly limited and may be appropriately adjusted as needed. For example, the charging/discharging process and the aging process may each independently be performed at least one time, and the aging process may be performed before and/or after the charging/discharging process.

The degassing process is intended to remove gas inside the battery cell. In the aging process and the charging/discharging process, gas is generated as an electrolyte chemically reacts with an electrode. When gas remains inside the battery cell, degradation in electrochemical performance may be caused, and thus it is desirable to discharge the gas inside the battery cell. For the degassing process, any general method used in the art may be used without limitation, and is not particularly limited. For example, the degassing process may be performed through a method of forming a gas outlet in a portion of a pouch, discharging the gas in a decompression chamber, and the sealing the gas outlet through heat fusion, or a method of forming a gas pocket in a portion of a pouch, moving gas into the gas pocket through pressurization, and then cutting the gas pocket to remove the gas.

**Step 4: Pre-charging/discharging**

Next, pre-charging/discharging is performed b times on the activated battery cell (S4). In this case, b is an integer of 0 to 3, preferably 1 to 3. In the case of b=0, it indicates that pre-charging/discharging is not performed.

According to the research of the present inventors, when the pre-charging/discharging is performed, during the pre-charging/discharging process, additional electrolyte impregnation takes place to reduce an electrolyte amount at an interface between an electrode assembly and a battery case, and accordingly, a frictional force between the battery case and the electrode assembly may increase to provide an effect of suppressing the movement of the electrode assembly from external shock. However, when the electrolyte injection amount is small or the pre-charging/discharging is performed too many times, the electrochemical properties of a battery may be degraded due to the excessively small amount of remaining electrolyte. Therefore, the precharging/discharging is needed to be performed an appropriate number of times in consideration of the electrolyte injection amount. Specifically, the number of pre-charging/discharging b is needed to be performed to satisfy Equation 1 or Equation 1-1 above, and is preferably performed 3 times or less. When the pre-charging/discharging is performed greater than 3 times. the time required to manufacture a battery increases to reduce productivity, and manufacturing costs also increase due to installation of multiple charging/discharging facilities. In addition, as the number of pre-charging/discharging increases, swelling takes place and a battery thickness increases.

The pre-charging/discharging may be performed in a SOC range of 0 to 100, preferably in a SOC range of 0 to 99, more preferably in a SOC range of 0 to 98.5 at a C-rate of 0.1 C to 1 C, preferably 0.1 C to 0.5 C. When a current rate during the pre-charging/discharging is too high, degradation reaction of a battery may accelerate and battery performance may be reduced, and when the SOC range is too small, battery breathing may not be sufficient, and thus the effect of increasing a frictional force may be insignificant.

Meanwhile, the pre-charging/discharging may vary depending on an active material and an electrolyte used, and may be performed, for example, in a voltage range of 2.50 V to 4.35 V. When the pre-charging/discharging voltage range is outside the above range, battery performance may be degraded due to overcharge or overdischarge.

When manufacturing a lithium secondary battery such that the electrolyte injection amount per unit capacity a and the number of pre-charging/discharging b satisfy the relationship of Equation 1 or Equation 1-1 as described above, a frictional force between the electrode assembly and the inner surface of the battery case with which the electrode assembly is in contact (e.g., the bottom surface of the cup portion of the pouch) greatly increases.

Specifically, the lithium secondary battery manufactured according to the method of the present invention may have a frictional force between the inner surface of the battery case and the electrode assembly of 15 kgf or greater, preferably 15 kgf to 30 kgf, more preferably 17 kgf to 30 kgf. In this case, the frictional force between the electrode assembly and the battery case was measured through the following method.

A portion of a battery case (pouch) of a lithium secondary battery was cut, a welded portion of a negative electrode lead and an electrode assembly was cut, and then a positive electrode tab was connected to a universal testing machine (UTM) to measure a force applied while being pulled at a rate of 100 mm/min, which was evaluated as a frictional force between the electrode assembly and the inner surface of the battery case.

The secondary battery according to the present invention has a high frictional force between the electrode assembly and the battery case as described above, and accordingly, damage to the battery case is minimized due to less separation of the electrode assembly even from external impact, and this results in excellent impact resistance. Specifically, in the lithium secondary battery according to the present invention, electrolyte leakage is not caused when a crash shock test is performed in a crash condition of 133.7 G × 15.8 ms (acceleration × duration time).

The crash shock test may be performed by mounting a battery to be measured on a jig of drop shock equipment, letting the battery free-fall from a certain height, and then determining whether the battery is damaged. In this case, the free-fall height is set in consideration of the crash condition (acceleration × duration time) to be measured. Specifically, impact energy in the crash condition to be measured may be converted into potential energy, and then the height that may have the converted potential energy may be calculated by considering the weight of a battery to be measured to set a free-fall height. Meanwhile, battery damage may be assessed based on the presence of electrolyte leakage.

## MODE FOR CARRYING OUT THE INVENTION

Hereinafter, the present invention will be described in more detail through specific embodiments.

**Example 1**

A pouch in which nylon, polyethylene terephthalate, Al alloy thin film, and polypropylene were sequentially stacked and a cup portion was molded was prepared. A stack electrode assembly having a full length of 548 mm and a full width of 99 mm was accommodated in the cup portion, and then an electrolyte was injected such that an electrolyte amount per unit capacity was 2.19 g/Ah, and then sealed to manufacture a battery cell. Then, the battery cell was charged/-discharged at a temperature range of 10 to 70 °C and a voltage range of 2.0 to 4.25 V, and then activated by performing a degassing process. Precharging/discharging was not performed.

**Example 2**

An activated battery cell was manufactured in the same manner as in Example 1, and then a pre-charging/-discharging process in which the battery cell was charged up to 4.25 V at 0.33 C in a SOC range of 0 to 98.3 and then discharged to up to 2.5 V at 0.33 C was performed once.

**Example 3**

An activated battery cell was manufactured in the same manner as in Example 1, and then a pre-charging/-discharging process in which the battery cell was charged up to 4.25 V at 0.33 C in a SOC range of 0 to 98.3 and then discharged to up to 2.5 V at 0.33 C was performed twice.

**Example 4**

An activated battery cell was manufactured in the same manner as in Example 1, and then a pre-charging/-discharging process in which the battery cell was charged up to 4.25 V at 0.33 C in a SOC range of 0 to 98.3 and then discharged up to 2.5 V at 0.33 C was performed three times.

**Comparative Example 1**

A pouch in which nylon, polyethylene terephthalate, Al alloy thin film, and polypropylene were sequentially stacked and a cup portion was molded was prepared. A stack electrode assembly having a full length of 548 mm and a full width of 99 mm was accommodated in the cup portion, and then an electrolyte was injected such that an electrolyte amount per unit capacity was 2.30 g/Ah, and then sealed to manufacture a battery cell. Then, the battery cell was charged/-discharged at a temperature range of 10 to 70 °C and a voltage range of 2.0 to 4.25 V, and then activated by performing a degassing process. Precharging/discharging was not performed.

**Comparative Example 2**

An activated battery cell was manufactured in the same manner as in Comparative Example 1, and then a precharging/discharging process in which the battery cell was charged up to 4.25 V at 0.33 C in a SOC range of 0 to 98.3 and then discharged to up to 2.5 V at 0.33 C was performed once.

**Example 5**

An activated battery cell was manufactured in the same manner as in Comparative Example 1, and then a precharging/discharging process in which the battery cell was charged up to 4.25 V at 0.33 C in a SOC range of 0 to 98.3 and then discharged to up to 2.5 V at 0.33 C was performed twice.

**Example 6**

An activated battery cell was manufactured in the same manner as in Comparative Example 1, and then a precharging/discharging process in which the battery cell was charged up to 4.25 V at 0.33 C in a SOC range of 0 to 98.3 and then discharged to up to 2.5 V at 0.33 C was performed three times.

Table 1 below shows the electrolyte injection amount (a), the number of pre-charging/discharging (b), and values calculated through Equation 1 for Examples 1 to 6 and Comparative Examples 1 and 2.

[Table 1]

|  | Electrolyte injection amount (a) [g/Ah] | No. of pre-charging/discharging (b) | $486.77 - 373.09 \times e^{(-0.006b)} \times a^{0.29}$ |
|---|---|---|---|
| Example 1 | 2.19 | 0 | 18.45 |
| Example 2 | 2.19 | 1 | 21.25 |
| Example 3 | 2.19 | 2 | 24.03 |
| Example 4 | 2.19 | 3 | 26.8 |
| Comparative Example 1 | 2.3 | 0 | 11.74 |
| Comparative Example 2 | 2.3 | 1 | 14.58 |
| Example 5 | 2.3 | 2 | 17.41 |
| Example 6 | 2.3 | 3 | 20.22 |

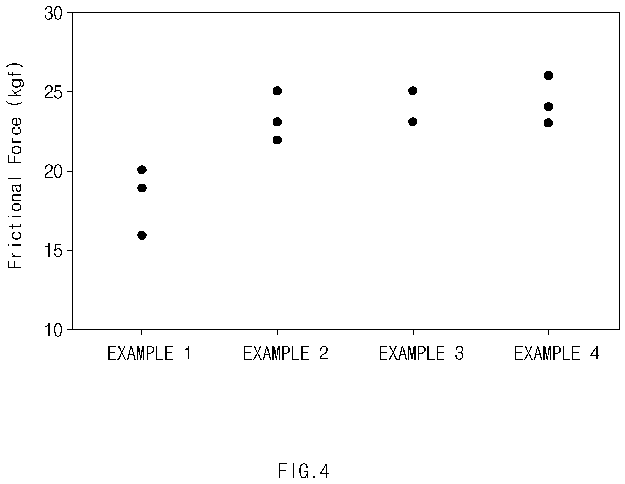

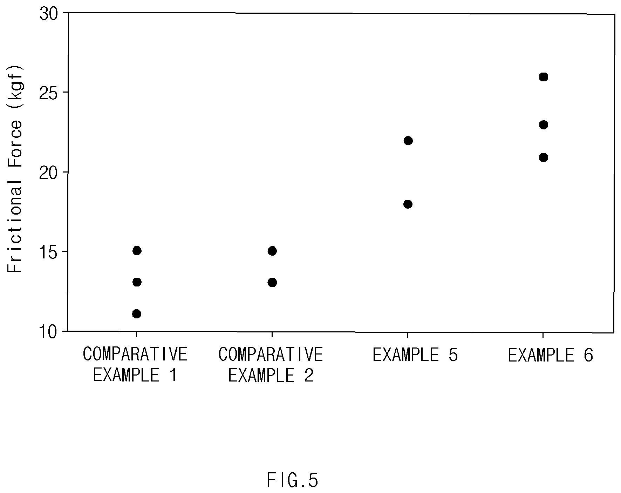

**Experimental Example 1: Friction Test** a portion of a pouch of lithium secondary batteries manufactured in Examples 1 to 6 and Comparative Examples 1 and 2 was cut, a welded portion of a negative electrode lead and an electrode assembly was cut, and then a positive electrode tab was connected to a universal testing machine (UTM) to measure a force applied while being pulled at a rate of 100 mm/min, which was evaluated as a frictional force between an electrode assembly and an inner surface of a battery case (bottom surface of a cup portion). For accurate measurement, two or three secondary batteries were measured for each Example and Comparative Example. The measurement results are shown in FIGS. 4 and 5.

As shown in FIGS. 4 and 5, the lithium secondary batteries of Examples 1 to 6, in which the electrolyte injection amount (a) and the number of precharging/discharging (b) satisfied the conditions of Equation 1, were observed to have a frictional force between the electrode assembly and the bottom surface of the cup portion of greater than 15 kgf, whereas the lithium secondary batteries of Comparative Examples 1 and 2, in which the electrolyte injection amount (a) and the number of precharging/discharging (b) failed to satisfy the conditions of Equation 1, were observed to have a frictional force between the electrode assembly and the bottom surface of the cup portion of 15 kgf or less.

**Experimental Example 2: Crash shock test**

A crash shock test was performed on pouch type secondary batteries manufactured in Examples 1 to 6 and Comparative Examples 1 and 2 in a crash condition of 133.7 G × 15.8 ms. The measurement results are shown in Table 2 below. No electrolyte leakage and no separation of electrode assembly after the test were indicated as Pass, and presence of electrolyte leakage and/or presence of separation of electrode assembly were indicated as Fail.

[Table 2]

|  | Crash shock test results |
|---|---|
| Example 1 | Pass |
| Example 2 | Pass |
| Example 3 | Pass |
| Example 4 | Pass |
| Comparative Example 1 | Fail |
| Comparative Example 2 | Fail |
| Example 5 | Pass |
| Example 6 | Pass |

As shown in Table 1 above, the lithium secondary batteries of Examples 1 to 6, in which the electrolyte injection amount (a) and the number of precharging/discharging (b) satisfied the conditions of Equation 1, showed a high frictional force between an electrode assembly and a bottom surface of a cup portion, and accordingly, separation of the electrode assembly from external impact was suppressed, showing excellent impact resistance. In contrast, the lithium secondary batteries of Comparative Examples 1 and 2, in which the electrolyte injection amount (a) and the number of pre-charging/discharging (b) failed to satisfy the conditions of Equation 1, showed a low frictional force between an electrode assembly and a bottom surface of a cup portion, and accordingly, electrolyte leakage was caused in the crash shock test.

**Claims**

1. A method for manufacturing a lithium secondary battery, the method comprising:

   a first step of preparing a battery case;
   a second step of disposing an electrode assembly in the battery case and injecting an electrolyte such that electrolyte mass per unit capacity is a (g/Ah) to assemble a battery cell;
   a third step of activating the battery cell; and
   a fourth step of pre-charging/discharging the activated battery cell b times,
   wherein Equation 1 below is satisfied,

   $$\text{Equation 1: } 15 \leq 486.77 - 373.09 \times e^{(-0.006b)} \times a^{0.29} \leq 30$$

   wherein in Equation 1 above, a is an integer of 2.0 to 3.0 and b is an integer of 0 to 3.

2. The method of claim 1, wherein Equation 1-1 below is satisfied,

   $$\text{Equation 1-1: } 15 \leq 486.77 - 373.09 \times e^{(-0.006b)} \times a^{0.29} \leq 27$$

   wherein in Equation 1-1 above, a is an integer of 2.0 to 3.0 and b is an integer of 0 to 3.

3. The method of claim 1, wherein a is 2.0 g/Ah to 2.5 g/Ah.

4. The method of claim 1, wherein in the fourth step, the pre-charging/discharging is performed in a SOC range of 0 to 99 at a C-rate of 0.1 C to 1 C.

5. The method of claim 1, wherein in the fourth step, the pre-charging/discharging is performed in a voltage range of 2.50 V to 4.35 V.

6. The method of claim 1, wherein the third step comprises charging/discharging the battery cell.

7. The method of claim 1, wherein the lithium secondary battery has a frictional force between an inner surface of the battery case and the electrode assembly of 15 kgf or greater.

8. The method of claim 1, wherein the lithium secondary battery has a frictional force between an inner surface of the battery case and the electrode assembly of 15 kgf to 30 kgf.

9. The method of claim 1, wherein when the lithium secondary battery is subjected to a crash shock test in a crash condition of 133.7 G $\times$ 15.8 ms, electrolyte leakage is in an amount of 0.

10. The method of claim 1, wherein the battery case is a pouch comprising a barrier layer, a base layer formed on one side of the barrier layer, and a sealant layer formed on the other side of the barrier layer, and comprising at least one cup portion indented in one direction.

11. The method of claim 1, wherein the electrode assembly has a ratio of full length to full width of 5 to 10.

12. The method of claim 11, wherein the electrode assembly has a full length of 400 mm to 600 mm and a full width of 50 to 150 mm.

13. The method of claim 1, wherein the lithium secondary battery has a rated capacity of 50 Ah to 200 Ah.

```
┌─────────────────────────────┐
│       PREPARE POUCH         │ ～S1
└─────────────────────────────┘
              │
              ▼
┌─────────────────────────────┐
│    ASSEMBLE BATERRY CELL    │ ～S2
└─────────────────────────────┘
              │
              ▼
┌─────────────────────────────┐
│         ACTIVATION          │ ～S3
└─────────────────────────────┘
              │
              ▼
┌─────────────────────────────┐
│   PRE-CHARGING/DISCHARGING  │ ～S4
└─────────────────────────────┘
```

FIG.1

FIG.2

FIG.3

FIG.4

FIG.5

## INTERNATIONAL SEARCH REPORT

International application No.

**PCT/KR2023/021348**

| A. | CLASSIFICATION OF SUBJECT MATTER |
|---|---|

**H01M 10/44**(2006.01)i; **H01M 50/105**(2021.01)i

According to International Patent Classification (IPC) or to both national classification and IPC

| B. | FIELDS SEARCHED |
|---|---|

Minimum documentation searched (classification system followed by classification symbols)

H01M 10/44(2006.01); G01R 31/3842(2019.01); G01R 31/385(2019.01); H01M 10/0565(2010.01); H01M 10/058(2010.01); H01M 10/42(2006.01); H01M 2/02(2006.01); H01M 50/105(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지(secondary battery), 충돌 쇼크(crash shock), 누설(leakage), 충방전 (charge and discharge), 전해액 주입(electrolyte injection)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2020-0018308 A (LG CHEM, LTD.) 19 February 2020 (2020-02-19)<br>See paragraphs [0003] and [0029] and figure 1. | 1-13 |
| A | JP 2010-080105 A (PANASONIC CORP.) 08 April 2010 (2010-04-08)<br>See paragraphs [0048]-[0065]. | 1-13 |
| A | KR 10-2022-0141548 A (SK ON CO., LTD.) 20 October 2022 (2022-10-20)<br>See paragraphs [0037]-[0046] and figure 1. | 1-13 |
| A | KR 10-0859628 B1 (SAMSUNG SDI CO., LTD.) 23 September 2008 (2008-09-23)<br>See paragraphs [0026]-[0029]. | 1-13 |
| A | KR 10-2021-0034985 A (LG CHEM, LTD.) 31 March 2021 (2021-03-31)<br>See paragraph [0024]. | 1-13 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 March 2024** | **28 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/021348**

| Patent document cited in search report | | | Publication date (day/month/year) | Patent family member(s) | | | Publication date (day/month/year) |
|---|---|---|---|---|---|---|---|
| KR | 10-2020-0018308 | A | 19 February 2020 | CN | 111418107 | A | 14 July 2020 |
| | | | | EP | 3703177 | A1 | 02 September 2020 |
| | | | | US | 11456493 | B2 | 27 September 2022 |
| | | | | US | 2021-0167432 | A1 | 03 June 2021 |
| | | | | WO | 2020-032545 | A1 | 13 February 2020 |
| JP | 2010-080105 | A | 08 April 2010 | | None | | |
| KR | 10-2022-0141548 | A | 20 October 2022 | US | 2022-0328898 | A1 | 13 October 2022 |
| KR | 10-0859628 | B1 | 23 September 2008 | | None | | |
| KR | 10-2021-0034985 | A | 31 March 2021 | CN | 114342148 | A | 12 April 2022 |
| | | | | EP | 4002539 | A1 | 25 May 2022 |
| | | | | JP | 2022-547501 | A | 14 November 2022 |
| | | | | US | 2022-0294037 | A1 | 15 September 2022 |
| | | | | WO | 2021-060811 | A1 | 01 April 2021 |

Form PCT/ISA/210 (patent family annex) (July 2022)